# EUROPEAN PATENT SPECIFICATION

(11) **EP 2 600 972 B1**
(45) Date of publication and mention of the grant of the patent: **19.10.2016**
(21) Application number: 11718963.9
(22) Date of filing: 18.04.2011
(51) Int. Cl.: B01L 3/00, B01L 3/14, B01D 29/00, G01N 1/28, C12N 1/02, G01N 1/40

(54) **NEW COLUMNS FOR INCUBATION AND ISOLATION OF CHEMICAL AND/OR BIOLOGICAL SAMPLES**
NEUE SÄULEN ZUR INKUBATION UND ISOLATION CHEMISCHER UND/ODER BIOLOGISCHER PROBEN
COLONNES INÉDITES UTILISABLES EN VUE DE L'INCUBATION ET DE L'ISOLEMENT D'ÉCHANTILLONS CHIMIQUES ET/OU BIOLOGIQUES

(30) Priority: 05.08.2010 EP 10172030
(43) Date of publication of application: 12.06.2013
(73) Proprietor: Vibod GmbH, 01445 Radebeul (DE)
(72) Inventor: DOBROWOLSKI, Peter, 01445 Radebeul (DE)
(74) Representative: CH Kilger Anwaltspartnerschaft mbB
(86) International application number: PCT/EP2011/056130
(87) International publication number: WO 2012/016720

(56) References cited:
- EP-A1- 1 767 274
- WO-A1-02/06456
- WO-A1-2010/014970
- DE-A1- 4 208 732
- GB-A- 2 139 519
- US-A1- 2007 102 344

## Description

### Field of the Invention

The present invention relates to the field of chemical and biological sample preparation, particularly the present invention relates to devices for incubation and isolation of samples, particularly of chemical and biological samples.

### Background of the Invention

Methods for analysing samples are of increasing importance in various fields, e.g. in chemistry, medicine, biology, veterinary medicine, forensic sciences, pharmaceutical industry, environmental analytics and food industry.

The analysis of biological material has long been of paramount importance in the diagnosis and treatment of disease, in food and environmental analysis and in forensic investigations, in particular using histological and pathological techniques. Recent technological advances have broadened the scope of such investigations by facilitating analysis of nucleic acids and proteins, which has opened up a large number of further possibilities. Gene activity can, for example, be determined directly by analysis of RNA, in particular the messenger RNA (mRNA) in cells. Quantitative analysis of transcription templates (mRNA templates) in cells by means of modem molecular biological methods, such as real time reverse transcriptase polymerase chain reaction (real time RT-PCR) or gene expression chip analysis enables, for example, the identification of incorrectly expressed genes, so that, for example, metabolic disorders, infections or the presence of cancer can be detected. The analysis of DNA from cells by molecular biological methods, such as PCR (polymerase chain reaction), RFLP (restriction fragment length polymorphism), AFLP (amplified fragment length polymorphism) or sequencing permits, for example, the detection of genetic defects or the determination of the HLA (human leukocyte antigen) type as well as other genetic markers, like short tandem repeats (STR) for the identification of individuals.

The analysis of genomic DNA and RNA is also used as direct evidence for infectious agents, such as viruses, bacteria, and the like.

As the benefits of being able to analyse certain components of biological samples, for example nucleic acids or proteins, have become known, and as the analyses themselves have become more accurate and more accessible, such analyses have become important and frequently used tools, available not only to the medical and veterinary professions, but also in a wide range of other areas, such as in the analysis of forensic materials, pharmaceutical products and intermediates, foods and environmental materials. In many of these areas it is important to maintain the integrity of the molecular structure of a sample.

Current procedures for the collection and/or handling of biological samples such as blood, saliva or cells, employ solid matrices such as cellulose- or cotton-based papers or swabs.

For buccal or vaginal smears, swabs with a head made of cellulose, cotton or polymer fibres are frequently used. Swabs with heads made from cotton or synthetic fibre and swabs with ejectable paper heads, for example, are available from various commercial suppliers.

Furthermore, biological samples, e.g. cells or genetic material, particularly in the field of forensic sciences, are often adhered to solid supports, e.g. cigarette filters, bones, etc.

In order to recover the biological sample from the solid support, it is necessary to elute the sample material away from the solid support. Therefore, the solid support, e.g. the tip of the swab, is incubated in a reaction vessel with buffers and under conditions that allow the release of the sample material from the solid support. To elute the sample material from the solid support efficiently it is required to incubate the disperse mixture of a solid and buffer over a longer time, e.g. over night. The buffer comprising the sample material has then to be separated from the solid support material. This is performed in different ways, e.g. by removal of the liquid from the reaction vessel, by pipetting or by removal of the solid support or by manual perforation of the bottom by needles or hollow needles. These procedures are cumbersome and prone to cross-contamination. Cross-contamination is a problem for all analytical methods, but particularly when working with samples destined for analysis of the nucleic acids, especially when employing an amplification process such as the polymerase chain reaction (PCR). Cross-contamination can, in the worst case, lead to distortion or even total falsification of the analysis results.

Since often only very small amounts of sample are concerned, for example on a nanogram scale, it is desirable to avoid as far as possible any loss or over-dilution of the sample. Therefore, it is desirable to use as less buffer as possible what is problematic when a pipette is used for the recovery of the buffer from the vessel.

All the processes for elution of sample material from solid supports are inefficient, prone to cross-contamination and can lead to loss of sample material unless large quantities of solvent are used. They are also difficult to automate, because the solid support can interfere with a liquid handling system. It is also difficult to design an automated system that is able to remove the solid support reliably from a vessel. Another problem is the amount of liquid that remains trapped in solid supports like swabs. Since this liquid comprises the target biomolecules, its removal with the solid matrix causes decreased yield and sensitivity.

The problem is to provide a system for eluting and separating sample material from solid support without the above outlined drawbacks, i.e. a system that avoids cross-contamination, is easy to handle and that allows automation. The present invention now provides a column and device that provides a system without the mentioned drawbacks.

### Description of the Invention

The problem is solved by the present invention through the provision of a column for incubating and/or isolating a chemical and/orbiological sample according to any of claims 1 to 5.

The present invention also provides for a device for incubating and/or isolating a chemical and/or biological sample according to claim 6.

### Figure legend

The following Figures are enclosed herein to exemplify preferred embodiments of the present invention. They shall in no way be interpreted as narrowing the scope of the present invention.

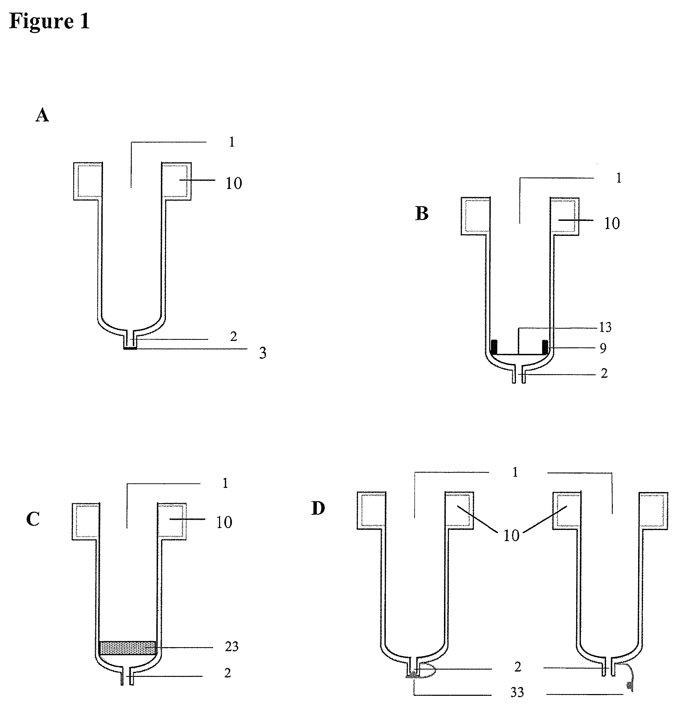

**Figure 1****:** The outlet openings (2) of the depicted columns comprise different closing means (3, 13, 23, 33, 43) **(A)** and **(B),** for example, a membrane may be used as the closing means (3, 13). **(A)**The membrane (3) may be attached to the outer part of the outlet opening (2). **(B)** Furthermore, the membrane may be attached to holding means (9) on the inner part of the outlet opening (2). **(C)** A device in which the closing means is a microporous barrier or a porous barrier with hydrophobic surface (23) is depicted. **(D)** The closing means may also be a lid (33) which may be fixed to the column by a flexible linker. The lid (33) is preferably reversible detached from the outlet opening (2) when the external pressure is applied. This is shown on the right.

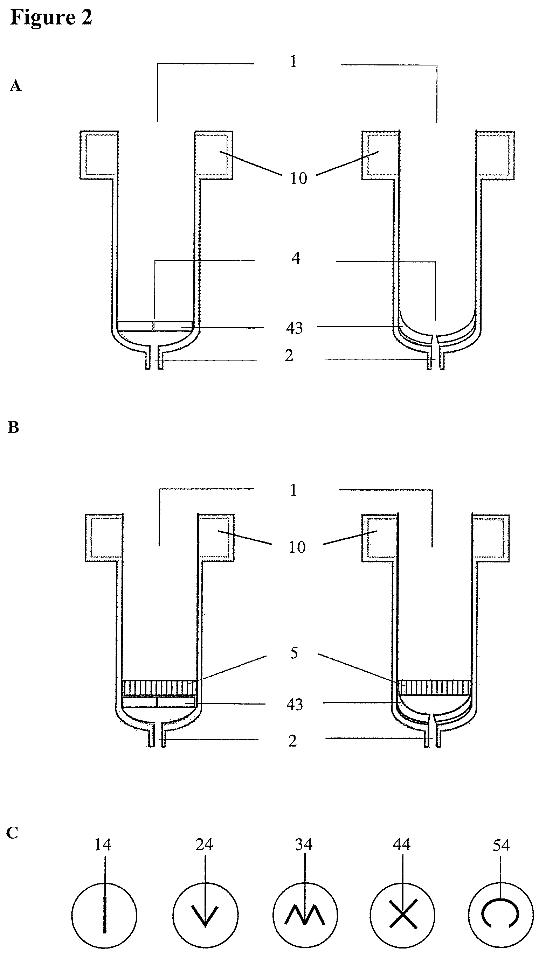

**Figure 2****:** Embodiments of the column according to the invention, with closing means made of a flexible material (43) comprising predetermined breaking points (49) are shown. **(A)** On the left side the column is shown as it appears when no external pressure is applied. The predetermined breaking point (49) is closed and the closing means is impermeable for liquids. After applying external pressure the predetermined breaking point (4) opens and the closing means made of a flexible material (43) is permeabilized as shown on the right side. **(B)** To improve the separation of the solid material from the liquid it may be desirable to include a filter (5). This filter may be applied above or below the closing means (43). **(C)** Different forms of predetermined breaking points (14, 24, 34, 44, 54) are given.

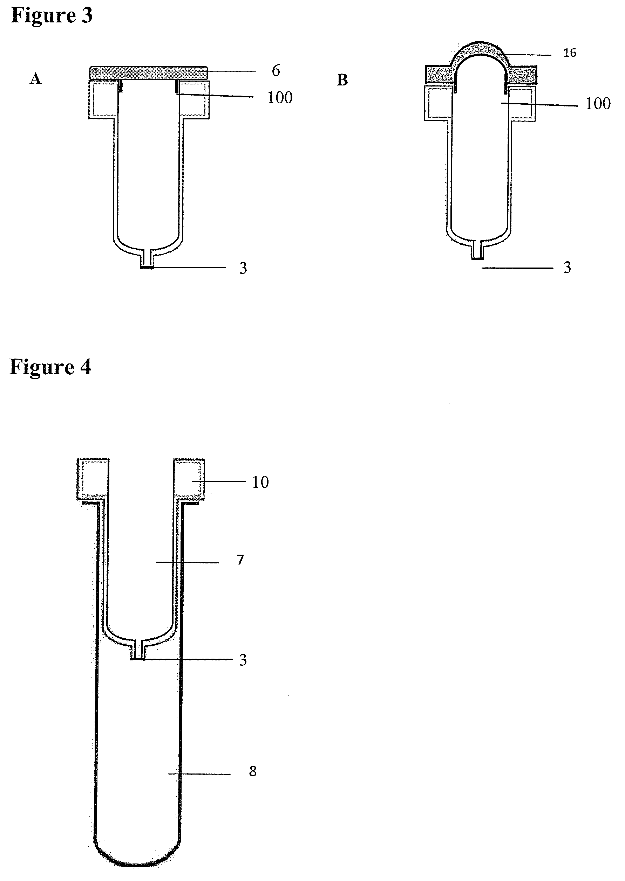

**Figure 3****:** Two forms of lids for the feed opening are depicted. **(A)** The lid may have a planar surface (6). **(B)** In one embodiment the lid has a convex surface (16).
**Figure 4****:** One embodiment of the device according to the present invention is depicted. The device comprises a collection tube (8) and a column (7) according to the present invention.

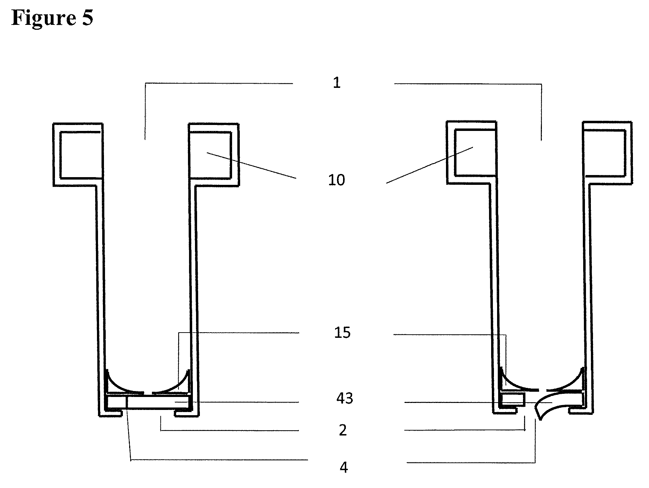

**Figure 5****:** A preferred embodiment of the column (7) according to the present invention is shown. The column comprises a filter (15) with a concave upper surface and a central pore. Furthermore, the closing means of the shown embodiment is a flexible seal (43) with a predetermined breaking point (4, 14, 24, 34, 44, 54).

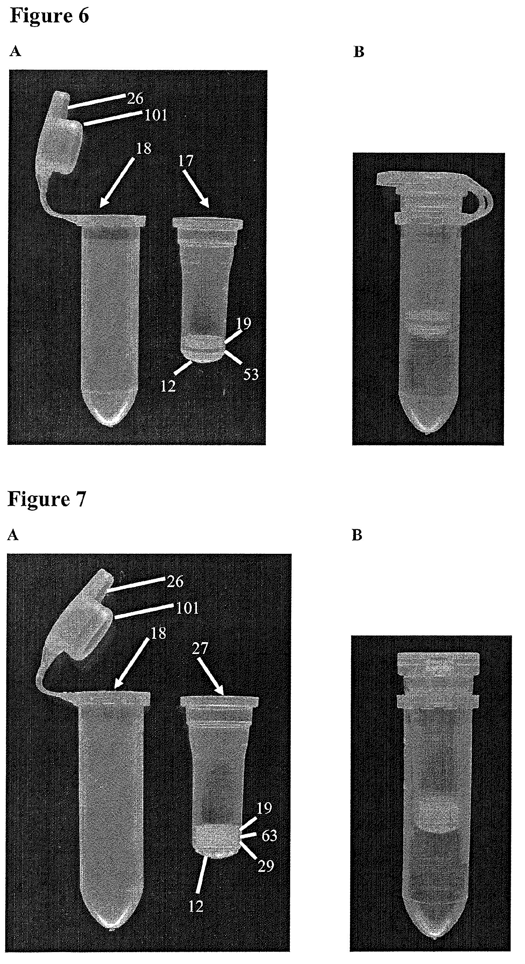

**Figure 6****:** A preferred embodiment of the column (17) or device not according to the present invention is shown. **(A)** The separate parts of the device are shown. On the left, an embodiment of the collection tube (18) is shown. In this embodiment the lid (26) for closing the feed opening is attached to the collection tube. The lid (26) comprises a downwardly extending circumferential closed skirt (100, 101). The closing means permeable for liquids only when an external pressure is applied, is a microporous polyethylene disc (53) (here:1 µm pore size, thickness 1 mm (Porex®)). This closing means is applied into the column (17) and fixed between the bottom of the column and an O-ring (19). Inbetween the O-ring (19) and the closing means (53) a bearing filter consisting of a polypropylene net filter disc (pore size 80 µm, thickness 280 µm(Millipore®)) is positioned to protect the closing means from rupture, e.g. through pipette tips. **(B)** The device of the preferred embodiment as shown in (A) is displayed assembled and closed.

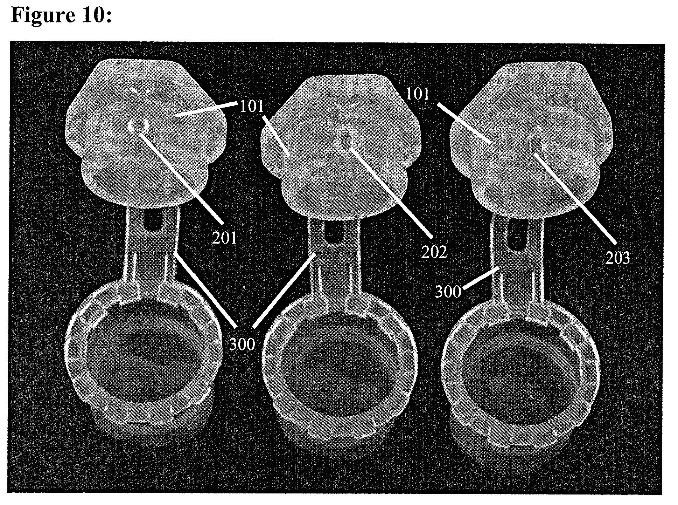

**Figure 7****:** A preferred embodiment of the column (27) or device not according to the present invention is shown. **(A)** The separate parts of the device are shown. On the left, an embodiment of the collection tube (18) is shown. In this embodiment the lid (26) for closing the feed opening is attached to the collection tube. The lid (26) comprises a downwardly extending circumferential closed skirt (100, 101) comprising one opening through which the air can exhaust while the lid is closed. The opening is not visible in this Figure but the form and position of the opening is as shown in Figure 10, most left lid. The closing means permeable for liquids only when an external pressure is applied, is an adhesive polypropylene, polyethylene or polytetrafluoroethylene (PTFE, Teflon) membrane (63). This closing means is applied into the column (27) and clued to the lower O-ring (29). In-between the upper O-ring (19) and the closing means (63) a bearing filter consisting of a polypropylene net filter disc (pore size 80 µm, thickness 280 µm (Millipore®)) is positioned to protect the closing means from rupture, e.g. through pipette tips. **(B)** The device of the preferred embodiment as shown in (A) is displayed assembled and closed.

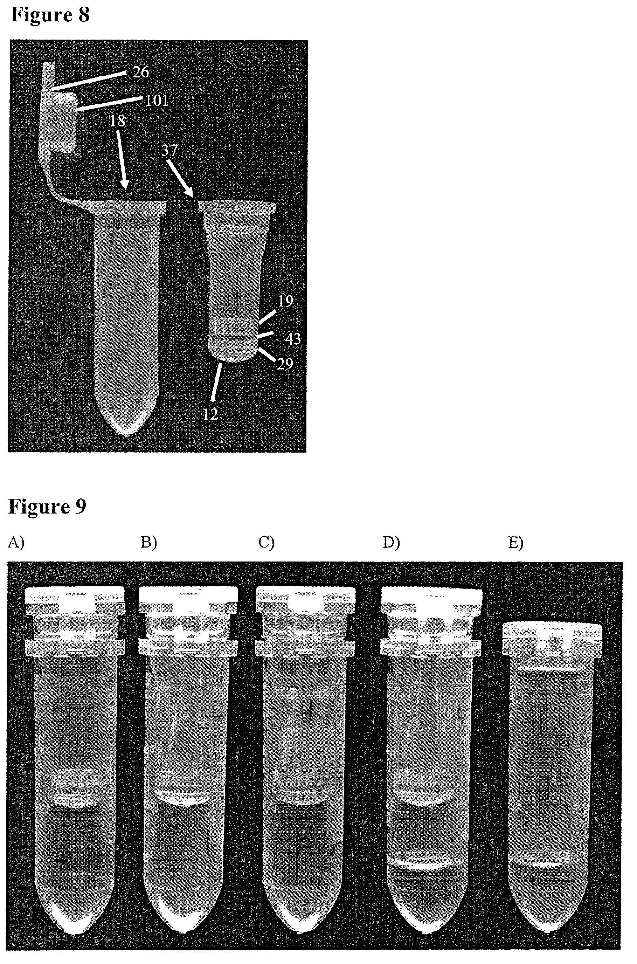

**Figure 8****:** A preferred embodiment of the column (37) or device according to the present invention is shown. The separate parts of the device are shown. On the left, an embodiment of the collection tube (18) is shown. In this embodiment the lid (26) for closing the feed opening is attached to the collection tube. The lid (26) comprises a downwardly extending circumferential closed skirt (100, 101) comprising one opening through which the air can exhaust while the lid is closed. The opening is not visible in this Figure but the form and position of opening is as shown in Figure 10, most left lid. The closing means permeable for liquids only when an external pressure is applied, is a flexible seal (43) consisting of foamed rubber and comprising a cut as a predetermined breaking point. This closing means is applied into the column (17) and fixed between two O-rings (19 and 29). In between the upper O-ring (19) and the closing means (53) a bearing filter consisting of a polypropylene net filter disc (pore size 80 µm, thickness 280 µm, Millipore®) is positioned to protect the closing means from rupture, e.g. through pipette tips.
**Figure 9****:** Illustration of different steps of a method. **(A)** The closed device according to the present invention (as described in Figure 6). **(B)** A solid support comprising potential sample material is applied into the column of the device according to the present invention. **(C)** Incubating the sample with a solution containing buffers and/or reagents for releasing the sample from the solid support. **(D)** After applying an external pressure to the closing means by centrifugation, the solution is transferred completely from the column to the collection tube. **(E)** After removing the column from the reaction tube the sample can be further processed or analysed without transfer.
**Figure 10****:** Embodiments of the lid according to the present invention

### Detailed Description of the Invention

The term "sample" as used herein refers to any kind of substance or substance mixture to be analysed. In a preferred embodiment the sample is a chemical or biological sample. A biological sample can be a sample collected from any biological source and is preferably a biological sample of any human, and/or animal and/or plant material. As biological samples according to the invention are generally considered, without limitation, cell-free and cell-comprising sample material, plasma, bodily fluids, such as blood, sputum, saliva, urine, cerebrospinal fluid, sperm, serum as well as cells, leukocyte fractions, crusta phlogistica (buffy coat), faeces, swabs, aspirates, tissue samples of any sort, tissue fragments and organs, vaccines, food or environmental samples which comprise free or bound nucleic acids or nucleic acid-carrying cells, plants, plant extracts and plant parts, bacteria, viruses, yeasts and other fungi, or extracts therefrom, other eukaryotes and prokaryotes, among others, in particular all possible tissue samples, tissue fragments, organs, whole organisms and individual cells. Preferred biological samples comprise a biological material such as any bodily fluid, such as blood, saliva, urine, semen, sputum or cerebrospinal fluid, an epithelial cell, a smear, a bacterium, a virus, a vaccine, a fine needle aspirate, a biopsy, a forensic sample, an isolated cell, a fungus or a part or an extract of a fungus, a plant or a part or an extract of a plant. Chemical samples comprise substances to be analysed, e.g. by liquid or gas chromatography, such as HPLC.

In a preferred embodiment the biological sample comprises a nucleic acid or nucleic acids. The term "nucleic acid" is here used in its broadest sense and comprises ribonucleic acids (RNA) and deoxyribonucleic acids (DNA) from all possible sources, in all lengths and configurations, such as double-stranded, single-stranded, circular, linear or branched. All sub-units and sub-types are also comprised, such as monomeric nucleotides, oligomers, plasmids, viral and bacterial nucleic acids, as well as genomic and non-genomic DNA and RNA from animal and plant cells or other eukaryotes or prokaryotes, messenger RNA (mRNA) in processed and unprocessed form, transfer RNA (tRNA), heterogeneous nuclear RNA (hn-RNA), ribosomal RNA (rRNA), complementary DNA (cDNA) as well as all other conceivable nucleic acids.

In a further preferred embodiment the biological or chemical sample is a sample to be analysed for the presence of chemicals. For example the sample is to be analysed for the presence of drugs, like narcotics.

It will be understood by those skilled in the art that the pressure applied to the closing means (3, 13, 23, 33, 43, 53, 63) has to act so that it allows the release of the sample from the inside of the column to the outside. Thus, in a preferred embodiment of the present invention the closing means is permeable for liquids only when an external pressure is applied, wherein said pressure acts on the inner surface of said closing means.

"Pressure" in context of the present invention is the pressure which acts on the inner surface of the closing means (3, 13, 23, 33, 43, 53, 63) of the column according to the present invention. The skilled artisan will recognize that thereby the pressure difference is meant, i.e. the difference of the pressure acting on the inside of said closing means and the pressure acting on the outside, e.g. the atmospheric pressure. All pressure values mentioned herein are relative values, i.e. the total pressure acting on the closing means minus the atmospheric pressure (on average 101 kPa).

"External" pressure in context of the present invention is any pressure which is applied to the inner surface of the closing means (3, 13, 23, 33, 43, 53, 63) through external forces. The skilled artisan knows ways to apply a pressure on the inner surface of the closing means (3, 13, 23, 33, 43, 53, 63) by external forces. For example, the column may be accelerated, e.g. centrifuged, so that a liquid within the column is pushed against the closing means resulting in a pressure on the inner surface on the closing means (3, 13, 23, 33, 43, 53, 63). However, the skilled artisan will recognize that the closing means (3, 13, 23, 33, 43, 53, 63) may be permeabilized through acceleration without applying liquid in the column, e.g. the closing means may be partially detached or the predetermined breaking points may open through the centrifugal force applied by centrifugation of the column (7, 17, 27). It is also possible to apply external pressure by pressurizing the column, e.g. by increasing the pressure in the column (7, 17, 27). The pressure in the column may be increased by pumping air into the column, e.g. through the feed opening, or by decreasing the volume of the closed column, e.g. by compression of the column (7, 17, 27). However, application of the external pressure by centrifugation is preferred.

It is furthermore desirable that the closing means (3, 13, 23, 33, 43, 53, 63) are impermeable under the conditions and the pressure acting on the closing means during incubation procedures, i.e. incubation with lysis or elution buffers for example on a shaker or incubation wheel. Moreover, it is desirable that the closing means remains impermeable for liquids when the feed opening is closed by a lid. The skilled artisan knows that by closing the column with a lid the column may be pressurized. However, in a preferred embodiment the closing means is not permeabilized for liquids by closing the feed opening of the column by a lid. The skilled artisan knows furthermore methods to determine the pressure the closing means (3, 13, 23, 33, 43, 53, 63) has to withstand without getting permeable for liquids. For example, it is desirable that the closing means (3, 13, 23, 33, 43, 53, 63) is not permeable for liquids under conditions where a liquid is applied in the column without the application of an external pressure, i.e. the closing means is impermeable for liquids under pressure generated by the hydrostatic head under normal gravity, i.e. 1 x g. The closing means is permeabilized by applying an external pressure on said closing means, i.e. a force is applied to the column (7, 17, 27, 37) which leads to a pressure on the closing means (3, 13, 23, 33, 43, 53, 63), e.g. by centrifugation, pressurizing the inside of the column or applying a vacuum from the outside to said closing means (3, 13, 23, 33, 43, 53, 63). However, the permeabilisation pressure of the closing means (3, 13, 23, 33, 43, 53, 63) may be adapted to the needs and the desired pressure can be determined by the skilled artisan, e.g. as outlined in the examples herein below. In a preferred embodiment of the present invention the closing means is essentially impermeable for liquids at a pressure of less than 150 kPa, preferably at a pressure of less than 250 kPa, more preferably less than 300 kPa, and wherein the closing means is permeable for liquids when an external pressure of at least 150 kPa is applied, preferably at least 250 kPa, more preferably at least 300 kPa.

The skilled artisan will recognize that the permeability of the closing means when reaching the desired pressure may be achieved in different ways. For example the closing means may be an impermeable membrane (3, 13, 63) which is attached at the outlet opening (2, 12) or at holding means (9) above the outlet opening (2, 12). In this case the closing means may get permeable for liquids when the desired external pressure is applied by being detached from the holding means (9) or the outlet opening (2, 12), respectively. The closing means may be detached completely or partially. In a preferred embodiment the closing means is partially detached from the outlet opening when an external pressure is applied.

In a preferred embodiment of the present invention the holding means (9) is one or more O-Ring (19, 29). In one embodiment the closing means is arranged between two O-rings (19, 29). The profile of the O-ring may be adapted. However, in a preferred embodiment the profile of the O-ring is a square profile, commonly called square-cuts, lathe cuts, or square rings. The material of the O-ring may be choosen by the skilled artisan. However, in a preferred embodiment the material is selected from the group consisting of polypropylene, polyethylene, and silicone rubber. In a further preferred embodiment an impermeable membrane, preferably consisting of polypropylene, polyethylene or polytetrafluoroethylene (PTFE) and having a thickness of between 10 µm and 300 µm, more preferably between 50 µm and 100 µm, and is clued or welded onto a first O-ring (29) positioned in the column according to the present invention, and a bearing filter is placed above the impermeable membrane covering and protecting said impermeable membrane from rupture, and a second O-ring (19) is placed above the bearing filter holding the assembly in position.

In one embodiment the closing means may be reversibly detached from the outlet opening when an external pressure is applied, i.e. the closing means can be reattached at the outlet opening. Thus, in a preferred embodiment the closing means is reversibly detached from the outlet opening when an external pressure is applied. In a further preferred embodiment the closing means is a lid (33). In yet a further embodiment the lid is attached to the column, preferably through a flexible connection (10).

According to the invention, the closing means comprises predetermined breaking points. The breaking points open when an external pressure is applied. Thus, the liquid may flow through the opened breaking points. In a preferred embodiment the closing means comprises at least one predetermined breaking point, wherein the at least one breaking point opens when an external pressure is applied. The shape of the predetermined breaking points may be chosen as desired. Examples are given in figure 2 of the application. In one embodiment of the present invention the predetermined breaking points have a shape selected from the group comprising I-shaped (14), V-shaped (24), M-shaped (34), X-shaped (44) and Ω-shaped (54).

It will be acknowledged by those skilled in the art that predetermined breaking points may be cuts within a flexible seal. Thus, in a preferred embodiment the closing means is a flexible seal (43), and wherein the at least one predetermined breaking point is a cut (4) within said flexible seal. The material of the closing means may be chosen as desired. In a preferred embodiment of the present invention the material of the closing means is flexible, preferably selected from the group comprising foamed rubber, silicone rubber, foamed silicone, polyethylene foam, polypropylene foam, synthetic rubber, natural rubber, extruded polyethylene foam, and extruded polypropylene foam. The thickness of the flexible seal may be selected according to the needs, i.e. the pressure at which the predetermined breaking points shall open. However, in a preferred embodiment of the present invention the flexible seal has a thickness of 0.5 mm to 5 mm, preferably 0.75 mm to 4 mm, more preferably 1 mm to 3 mm.

In another device, the closing means is a porous barrier. As outlined above, the closing means is impermeable for liquids when no external pressure is applied and gets permeable for liquids when an external pressure is applied to the closing means. In context with a porous barrier this may be achieved by a microporous structure or by a hydrophobic surface of the porous barrier. Thus, in a preferred embodiment of the present invention said closing means is a porous barrier with a hydrophobic surface. It will be readily understood that the grade of hydrophobicity as well as the average diameter of the pores may be adapted in order to achieve permeability for liquids at the desired pressure.

In another device, said closing means permeable for liquids only when an external pressure is applied is a microporous barrier or a porous barrier with a hydrophobic surface. In one embodiment the microporous barrier may also comprise a hydrophobic surface. The column comprising the porous barrier may be used repeatedly, e.g. for incubating a solid support several times. The porous barrier may be of different thickness according to the needs. A thicker porous barrier will lead to a higher pressure needed for permeabelising the barrier. In a preferred embodiment the porous barrier has a thickness of between 0.1 mm and 2 mm, preferably between 0.5 mm and 1.5 mm, more preferably 1 mm.

The term "microporous" refers to pores with an average size of between 0.05 µm and 8 µm, preferably between 0.1 µm and 5 µm, more preferably between 0.45 µm and 3 µm. In a preferred embodiment the microporous barrier has an average pore size of between 0,65 µm and 2 µm and a thickness of approximately 1 mm.

In one embodiment the column further comprises means for holding back of solid materials, e.g. the solid support or cell debris or the like. Thus, in a preferred embodiment of the present invention the column further comprises a filter permeable for liquids. In a preferred embodiment the filter permeable for liquids (5) comprises or consists of material selected from the group consisting of polypropylene, water and/or solute permeable membranes, paper, cotton, cellulose membranes (e.g. cellulose acetate membranes, cellulose nitrate membranes), mixed cellulose ester membranes, regenerated cellulose membranes, nylon membranes, polyamide membranes, polypropylene membranes, polyethersulfone membranes (PES), polytetrafluoroethylene (PTFE; Teflon®) membranes, and track-etched polycarbonate and polyester membranes. In a preferred embodiment the filter has at least one pore with a defined diameter. In a preferred embodiment the filter permeable for liquids (5) has at least one pore with a diameter of 0.1 mm to 3 mm, preferably 0.25 mm to 2 mm, more preferably 0.5 mm to 1 mm. The shape of the filter may be adapted to the needs. However, in a preferred embodiment of the present invention the upper surface of the filter permeable for liquids (5) forms a cone ending in a pore of the filter permeable for liquids (5). In a preferred embodiment the upper surface of the filter permeable for liquids (15) is concave, preferably with a central pore. The skilled artisan will recognize that the cone shaped or concave upper surface of the filter permeable for liquids (5, 15) facilitates handling of small volumes of buffers, as the small volumes are gathered towards the central pore. The inventor unexpectedly found that, furthermore, the separation of solids and liquids is enhanced by so shaped filters. Furthermore, in one embodiment the filter permeable for liquids is a bearing filter positioned above the closing means (3, 13, 23, 33, 43, 53, 63), preferably the filter permeable for liquids is consisting of polypropylene or polyethylene. The skilled artisan will recognize that the bearing filter has to be rigid.

The dimensions of the column according to the present invention may be adapted depending on the needs. However, since the laboratory equipment, e.g. centrifuges in chemical, medical, biological and forensic laboratories are often standardized, the dimensions of the column and device according to the present invention are chosen to be compatible with standard laboratory equipment.

In a preferred embodiment of the present invention the diameter of the outlet opening is between 1 mm to 200 mm, preferably 1 mm to 15 mm.

The diameter of the outlet opening may be adapted to the respective needs. It may be desired that the column walls or parts of it narrow toward the outlet opening. This may facilitate the separation of the solid material from the liquid in centrifuges at relative low centrifugation speeds as exemplified in the examples herein below. Thus, in one embodiment of the present invention the diameter of the outlet opening is smaller then the diameter of the feed opening. However, in another embodiment of the present invention the outlet opening has the same diameter as the feed opening.

Furthermore, the outlet opening may have different shapes. The outlet opening may comprise more than one opening, e.g. the outlet opening may be an arrangement of openings (12) at the bottom of the column. The embodiments shown in Figures 6 to 9 comprise an arrangement of openings (12) at the bottom of the column. The skilled artisan will acknowledge that thereby unwanted contact with the closing means from the side of the outlet opening can be prevented.

An especially preferred embodiment of the present invention is depicted in Figure 5. Accordingly, in one embodiment of the present invention the filter permeable for liquids (15) comprises a concave upper surface and one central pore. In a further embodiment the closing means is a flexible seal (43), wherein the flexible seal (43) is positively fitted between the outlet opening (2, 12) and the filter permeable for liquids. In one embodiment the predetermined breaking point is not directly underneath the pore of the filter permeable for liquids.

The column and/or the collection tube may consist of various materials. The skilled artisan will readily appreciate that the material may be selected according to the desired properties with respect to the stiffness and/or reactivity with the liquids and/or solids. He will furthermore recognize that it is preferred that the materials do not interact with liquids (e.g. extraction and/or lysis buffers) and/or solids of the samples to be incubated in the column or device according to the present invention. Furthermore, the material may be selected to withstand buffers and chemicals used in procedures of incubation and/or isolation of chemical and/or biological samples. In a preferred embodiment of the present invention the material of the column (7, 17, 27, 37) and the collection tube (8) may be independently selected from the group consisting of polypropylene and polyethylene.

As outlined herein, the column according to the present invention is well suited for both, incubating and isolating of chemical and/or biological samples. It may be desired that for the incubation the column is closed on both sides, i.e. the feed opening and the outlet opening. Thus, in a preferred embodiment the feed opening is reversibly closed by closing means. In a yet further preferred embodiment the feed opening is closed by a lid (6, 16). The form of the lid may be adapted to the needs and/or the equipment the column or device is used in. In one embodiment of the present invention the lid has a planar upper surface (6). In a further embodiment the lid has a convex surface (16). In a yet further embodiment the lid is attached to the column (7, 17, 27). In one embodiment of the device according to the present invention the closing means of the feed opening is attached to the collection tube (8). The closing means of the feed opening may be attached to the column (7, 17, 27, 37) or collection tube (8) by a flexible connection as desired. As outlined above, closing the feed opening with a lid may lead to an increase of the pressure inside the column (7, 17, 27). However, as also outlined above, it is not desired that the closing means of the outlet opening get permeable for liquids before the external pressure is applied to the closing means of the outlet opening. However, it is preferred that the closing means (3, 13, 23, 33, 43, 53, 63) at the outlet opening does not get permeable for liquids due to the increased pressure caused by closing the feed opening with a lid. Thus, in a preferred embodiment the lid comprises a flexible ceiling. The skilled artisan will readily recognize that the flexible ceiling can compensate the increased pressure in the column. The material of the flexible ceiling may be chosen in accordance with the needs, i.e. according to the pressure it shall compensate. The skilled artisan knows how to calculate the pressure increase caused by closing the feed opening with a lid. He knows that the pressure is increased by the additional air which is applied into the column.

The inventors unexpectedly found that the pressure increase caused by closing the feed opening with a lid can be avoided if the lid comprises a downwardly extending circumferential closed skirt (100, 101) comprising at least one opening (200) through which the air can exhaust while the lid is closed. Hence, the present invention also relates to a lid (26) for closing reaction tubes or columns or devices according to the present invention comprising a downwardly extending circumferential closed skirt, wherein the skirt comprises at least one opening through which the air can exhaust while the reaction tube, column or device is closed with the lid. The opening (200) may have different forms. In one embodiment the opening is an essentially round opening (201). In another embodiment the opening is an oval opening (202). In yet another embodiment the opening is a vertical cut within the skirt (203). In a preferred embodiment the lid is attached to the reaction tube, column or device through a flexible linker (300). In a preferred embodiment the flexible linker (300) is integral with the reaction tube, column or device and the lid (26) for closing reaction tubes or columns or devices according to the present invention. In a preferred embodiment the opening (200, 201, 203) is positioned oppositely to the flexible linker (300).

The present invention furthermore, relates to reaction tubes comprising a lid according to the present invention.
Furthermore, in one embodiment the device according to the present invention comprises a lid (26) according to the present invention. In a preferred embodiment the lid is attached to the collection tube via a flexible linker (300). A preferred embodiment of the collection tube is shown in Figures 6A, 7A, 8, 9 and 10.

The collection tube (8) of the device according to the present invention is arranged so that it can receive liquids flowing through the closing means (3, 13, 23, 33, 43, 53, 63). In one embodiment of the present invention the column (7, 17, 27, 37) is fitted into the opening of the collection tube (8) and partially extending into the collection tube (8). In a preferred embodiment of the present invention the volume of the collection tube remaining below the column (7, 17, 27, 37) is greater than the total volume of the column (7, 17, 27). In a further preferred embodiment the volume remaining below the column (7, 17, 27), is between 1 µl and 1000 µl, preferably between 50 µl and 500 µl, more preferably between 75 µl and 250 µl. In another preferred embodiment the volume remaining below the column (7, 17, 27) is between 50µl and 750 µl, preferably between 75 µl and 500 µl.

In one embodiment of the present invention a lid according to the present invention is attached to the collection tube (8) of the device according to the present invention. In another embodiment a lid according to the present invention is attached to the column (7, 17, 27, 37) according to the present invention.

The column according to the present invention is preferably used in a device according to the present invention. As the device comprises a collection tube (8) into which the column (7, 17, 27, 37) is fitted and partially extended it may be desirable that the top of the column further comprises a rim (10) that holds the column in its position. Thus, in a preferred embodiment the column comprises a rim (10) for fitting the column in a collection tube (8).

For handling of great numbers of samples it might be desirable to have more than one column (7, 17, 27, 37) or device according to the present invention. For automated handling the arrangement of the columns or devices may be according to the needs. For example, plate patterns of 8 x 12 (96) wells or strips of 6 to 8 wells are well established in the field. Thus, in one embodiment the present invention relates to a multi-column device comprising 2 to 96 columns (7, 17, 27, 37) or devices according to the invention as outlined herein above. In a preferred embodiment 6 to 8 columns or devices are connected to a strip. In a further preferred embodiment 96 columns (7, 17, 27, 37) or devices are connected in pattern of 8*12 columns (7, 17, 27, 37) or devices, respectively. However, the number of columns or devices of the multi-column device as well as their pattern may be adapted to the respective needs.

In yet a further embodiment two or more columns are combined in a cascade. The skilled artisan will readily appreciate that more than one column according to the present invention may be combined so that the fluid after flowing through the closing means of the first column is received by a second column. In a preferred embodiment the present invention relates to a device comprising two columns (7, 17, 27, 37) wherein the columns are arranged so that the liquid flow through the closing means of the first column is received by the second column. In yet a further embodiment the device comprises 2 to 4 columns arranged in an outlet opening to feed opening arrangement. In a preferred embodiment the closing means (3, 13, 23, 33, 43, 53, 63) of the first column get permeable at a pressure that is lower than the pressure at which the closing means (3, 13, 23, 33, 43, 53, 63) of the second column are permeabilized, and the pressure at which the closing means (3, 13, 23, 33, 43, 53, 63) of the second column are permeabilized is lower than the pressure at which the closing means (3, 13, 23, 33, 43, 53, 63) of the third column is permeabilized and so on. This may for example be achieved by choosing different shapes of predetermined breaking points or by choosing different types of closing means (3, 13, 23, 33, 43, 53, 63) as disclosed herein. As an example, the predetermined breaking points of the closing means of the first column may have a Ω-shape (54), the predetermined breaking points of the closing means of the second column may have a W-shape (34), the predetermined breaking points of the closing means of the third column may have an I-shape (14).An example and preferred embodiment for using different types of closing means is: the closing means of the first column may be a flexible seal (43) consisting of foamed rubber with an Ω-shape cut (54) as a predetermined breaking point, the closing means of the second column may be a porous barrier (53), the closing means of the third column may be an impermeable polypropylene membrane (63) clued to an O-ring (29).Such cascades of columns can be used in methods were stepwise incubation or isolation may be desired.

According to the method according to the present invention the external pressure to the closing means is applied by centrifugation.

It has been unexpectedly found by the inventor that in the method for releasing a chemical and/or biological sample and/or to separate liquids from solids according to the present invention the solid material is displaced/pressed towards the walls of the column (7, 17, 27, 37) and adhered thereto before the closing means is permeabilized by the external pressure applied through centrifugation. This facilitated the separation of the solid material from fluids. This effect is further enhanced when a fixed angle rotor was used. Thus, in a preferred embodiment of methods according to the present invention the centrifugation is performed with a fixed angle rotor. Fixed angle rotors are known by those skilled in the art (see e.g. US 4,509,940). In a fixed angle rotor the angle of a column relative to the rotational axis does not change during centrifugation. In a preferred embodiment of the present invention the angle of the rotor relative to the rotational axis is between 0° and 90°, preferable between 20° and 70°, more preferably 30° to 50°.

The present invention also relates to the use of a column or device according to the present invention in a method comprising centrifugation.

### Examples

### Example 1 (not according to the invention)

### A column with an impermeable membrane welded to the outlet opening

0.5 cm * 0.5 cm pieces of "MicroAmp™" Optical Adhesive Film (Applied Biosystems®) are welded thermical for 2 s to the outlet opening of columns by use of Thermo Sealer (ABGENE®, Cat.-No. AB-0384/240). The column is then fitted into labelled collection tubes (2 ml Eppendorf Tube). 500 µl of water and 20 to 40 pieces of paper (2 mm * 2 mm each; simulating the solid support of a sample) were applied into the column. The column was closed at the feed opening with a lid.

The device containing the water and the paper is centrifuged at 4000 rpm for 1 min using a fixed angle rotor in a conventional lab-bench centrifuge (Eppendorf Centrifuge 5415D, rotor FA-45-24-11). The pieces of paper are displaced to the walls of the column and adhere thereto. However, the closing means at the outlet opening of the column remains completely attached to the column and impermeable for liquids. After increasing the pressure to the closing means by raising the speed of centrifugation to 12,000 rpm for 1 min the membrane partially detaches from the column and thereby the closing means is permeabilized for liquids. The water is transferred to the collection tube while the pieces of paper remain within the column.

### Example 2

### (not according to the invention)

### DNA isolation from blood at a cotton swab

The tips of cotton swabs comprising a blood sample are applied into columns or devices like outlined in example 1. 200 µl of lysis buffer (Buffer G2, Qiagen MagAttract® DNA Mini M48 Kit, Kat.-Nr. 9533369) are added to the column. The columns are closed and the devices comprising the swab tip and the lysis buffer are incubated for 60 min at 56°C. Thereafter the devices are centrifuged in a lab-bench centrifuge (Eppendorf Centrifuge 5415D, Rotor FA-45-24-11) for 2 min at 12,000 rpm. The tips of the cotton swabs remain in the columns while the lysis buffer is transferred to the collection tubes. Columns are removed from the collection tube and discarded. The collection tubes are directly transferred to a robot for DNA isolation. No further processing like transferring to another tube and additional labelling is needed, as the collection tubes are labelled when the sample is applied. Thus, the collection tubes can unambiguously be allocated to the samples. Thereby interchanging of samples is avoided.

### Example 3

### Determination of preferred flexible sealing with different forms of predetermined breaking points.

The skilled artisan is able to determine flexible sealings comprising predetermined breaking points with the desired properties, i.e. the breaking points open at the desired externally applied pressure. For example disks of foamed rubber with a defined thickness, e.g. 1.5 mm, are applied positively into outlet openings of columns. The disks comprise different forms of predetermined breaking points (cuts). The columns are then applied into collection tubes (2 ml Eppendorf Tube). 100 µl or 500 µl of water are applied into the column. The columns comprising the water are centrifuged in a lab-bench centrifuge (Eppendorf Centrifuge 5415D, Rotor FA-45-24-11) for 1 min at the indicated speed (see Table 1 and 2). The amount of water transferred to the collection tube (%) is determined.

Furthermore, in a separate experiment the amount of solid state of disperse mixtures (i.e. fluids (e.g. water or buffer) comprising solid material (e.g. cotton from a swab or other solids)) is determined that is displaced to the wall of the column and adhered thereto.

**Table 1: Transferred water (%) of 100 µl total volume. The shapes indicated at the upper row relate to the shape of the cuts within the foamed rubber. The numbers in brackets refer to Figure 2 (C) where examples of the forms are given. The determined amount of transferred water is recorded in the table and the shape of breaking points is chosen according to the needs.**

| Speed | I-shape (14) | V-shape (24) | X-shape (44) | M-shape (34) | Ω-shape (54) | without cut | Displacement of solid material* |
|---|---|---|---|---|---|---|---|
| 100 x g | 0 | 0 | 0 | 0 | 0 | 0 | + |
| 200 x g | 0 | 10 | 0 | 10 | 0 | 0 | ++ |
| 300 x g | 5 | 20 | 5 | 20 | 20 | 0 | ++ |
| 400 x g | 10 | 30 | 10 | 30 | 35 | 0 | +++ |
| 500 x g | 10 | 40 | 25 | 35 | 60 | 0 | +++ |
| 600 x g | 15 | 50 | 40 | 45 | 65 | 0 | +++ |
| 700 x g | 25 | 50 | 50 | 100 | 100 | 0 | +++ |

| | | | | | | | |
|---|---|---|---|---|---|---|---|
| *solid material displaced to the wall of the column + - solid material displaced partially, ++ - solid material displaced mostly, +++ - solid material displaced completely | | | | | | | |

**Table 2: Transferred water (%) of 500 µl total volume. The shapes indicated at the upper row relate to the shape of the cuts within the foamed rubber; the numbers in brackets refer to Figure 2 (C) where examples of the forms are given. The determined amount of transferred water is recorded in the table and the shape of breaking points is chosen according to the needs.**

| Speed | I-shape (14) | V-shape (24) | X-shape (44) | M-shape (34) | Ω-shape (54) | without cut | Displacement of solid material* |
|---|---|---|---|---|---|---|---|
| 100 x g | 0 | 4 | 0 | 4 | 6 | 0 | + |
| 200 x g | 4 | 19 | 9 | 20 | 32 | 0 | ++ |
| 300 x g | 8 | 26 | 15 | 33 | 62 | 0 | ++ |
| 400 x g | 19 | 32 | 21 | 62 | 74 | 0 | +++ |
| 500 x g | 28 | 52 | 36 | 75 | 100 | 0 | +++ |
| 600 x g | 34 | 60 | 40 | 80 | 100 | 0 | +++ |
| 700 x g | 35 | 84 | 45 | 88 | 100 | 0 | +++ |

| | | | | | | | |
|---|---|---|---|---|---|---|---|
| *solid material displaced to the wall of the column + - solid material displaced partially, ++ - solid material displaced mostly, +++ - solid material displaced completely | | | | | | | |

### Example 4

(not according to the invention) **Isolating DNA from a soil specimen** The outlet opening of a column is closed by a lid (33). A paper disk is placed on a porous polypropylene support and fixed within the column with an O-ring consisting of polypropylene. This acts as a liquid permeable filter (5). The so prepared column (7, 17, 27, 37) is inserted into a labelled collection tube comprising a lid (2 ml Eppendorf Tube). 500 µl water and a soil specimen are applied into the column (7, 17, 27). The feed opening of the column is closed with the lid attached at the collection tube and the device is incubated at 95°C for 10 min.

The device is centrifuged in a fixed angle rotor (see examples 1 to 3) for 1 min at 4000 rpm. Solid material of the soil is displaced to the wall of the column while the lid at the outlet opening of the column remained impermeable for liquids. After increasing the speed to 8000 rpm for 1 min the lid is detached from the outlet opening and consequently the liquid was transferred to the collection tube. The paper disk further served as a filter to hold back solids of the soil specimen. The solid material remains in the column. The column is removed and the labelled collection tube is placed into a DNA-isolation robot (M48, Qiagen).

### Example 5

### (not according to the invention)

### Permeabilization of closing means in dependence of applied external pressure using different types of closing means.

The skilled artisan is able to determine an arrangement of columns combined in a cascade comprising predetermined permeabilization, i.e. the closing means opens at the desired externally applied pressure.

To exemplify this, the three different types of closing means of spin columns presented in Figures 6, 7 and 8 where permeablized at different external pressures. The appropriate type of closing means can be chosen according to the needs, e.g. when combined in a cascade of columns.

For determination of the amount of liquid flow through at defined external pressure 200 µl of water were applied into the columns according Figures 6, 7, and 8. The columns comprising the water are centrifuged in a lab-bench centrifuge (Eppendorf Centrifuge 5415D, Rotor FA-45-24-11) for 1 min at the indicated speed (see Table 3). The amount of water transferred to the collection tube (%) is determined.

**Table 3: Transferred water (%) of 200 µl total volume. The types of closing means indicated at the upper row relate to the columns shown in Figures 6, 7 and 8. The determined amount of transferred water is recorded in the table.**

| Speed | Flexible seal, M -shape (34) Fig. 8 | Microporous disc 1 µm pore size Fig. 6 | Polypropylene membrane Fig. 7 |
|---|---|---|---|
| 1000 x g | 100 | 0 | 0 |
| 7000 x g | 100 | 100 | 0 |
| 16.000 x g | 100 | 100 | 100 |

## Claims

1. A sample column for incubating and/or isolating a chemical and/or biological sample, wherein the column comprises
(i) a feed opening (1);
(ii) an outlet opening (2, 12) with closing means;
wherein the closing means is permeable for liquids only when an external pressure through centrifugation is applied, wherein said external pressure acts on the inner surface on the closing means, characterised
wherein the closing means comprises at least one predetermined breaking point (4, 14, 24, 34, 44, 54), wherein the at least one breaking point opens when the external pressure is applied.

2. A sample column according to claim 1, wherein the closing means is a flexible seal (43), comprising at least one predetermined breaking point (4, 14, 24, 34, 44, 54), wherein the at least one breaking point opens when the external pressure is applied..

3. A sample column according to any of claims 1 to 2, wherein the material of the closing means is selected from the group consisting of foamed rubber, silicone rubber, foamed silicone, polyethylene foam, polypropylene foam, synthetic rubber, natural rubber.

4. A sample column according to any of the claims 1 to 3 comprising a lid, wherein the lid is attached to the tube.

5. A sample column according to any of the claims 1 to 3 comprising a lid, wherein the lid is part of a collection tube.

6. A device for biological samples comprising,
(i) a sample column according to any of the claims 1 to 3;
(ii) a collection tube comprising a lid

## Patentansprüche

1. Ein Probensäulchen zur Inkubation und/oder Isolation einer chemischen und/oder biologischen Probe, wobei das Säulchen umfasst:
(i) eine Zuführöffnung (1)
(ii) eine Auslassöffnung (2, 12) mit Verschluss;
wobei der Verschluss nur für Flüssigkeiten durchlässig ist, wenn ein äußerer Druck durch Zentrifugation angewendet wird, wobei besagter externer Druck auf der inneren Oberfläche des Verschlusses agiert,
**gekennzeichnet dadurch, dass** der Verschluss mindestens eine Soll-Bruchstelle (4, 14, 24, 34, 44, 45) umfasst, wobei die mindestens eine Soll-Bruchstelle öffnet, wenn äußerer Druck angewandt wird.

2. Ein Probensäulchen nach Anspruch 1, wobei der Verschluss eine flexible Dichtung (43) ist, umfassend mindestens einer Soll-Bruchstelle (4, 14, 24, 34, 44, 54), wobei die mindestens eine Soll-Bruchstelle öffnet, wenn äußerer Druck angewandt wird.

3. Ein Probenröhrchen nach einem der Ansprüche 1 bis 2, wobei das Material des Verschlusses ausgewählt ist aus der Gruppe bestehend aus Schaumgummi, Silikonkautschuk, Silikonschaum, Polyethylene-Schaum Polypropylen-Schaum, Synthesekautschuk, natürlicher Kautschuk.

4. Ein Probenröhrchen nach einem der Ansprüche 1 bis 3 umfassend eines Deckels, wobei der Deckel am Röhrchen befestigt ist.

5. Ein Probenröhrchen nach einem der Anspruche 1 bis 3 umfassend eines Deckels, wobei der Deckel Teil eines Sammelröhrchens ist.

6. Eine Vorrichtung für biologische Proben umfassend,
(i) eines Probenröhrchens nach einem der Ansprüche 1 bis 3;
(ii) eines Sammelröhrchens umfassend eines Deckels.

## Revendications

1. Colonne à échantillon pour incuber et/ou isoler un échantillon chimique et/ou biologique, où la colonne comprend
(i) une ouverture d'alimentation (1) ;
(ii) une ouverture de sortie (2, 12) avec un moyen de fermeture ;
où le moyen de fermeture est perméable aux liquides seulement lorsqu'une pression extérieure est appliquées par centrifugation, où ladite pression extérieure agit sur la surface interne sur le moyen de fermeture, **caractérisée en ce que** le moyen de fermeture comprend au moins un point de rupture prédéterminé (4, 14, 24, 34, 44, 54), où le au moins un point de rupture s'ouvre quand la pression extérieure est appliquée.

2. Colonne à échantillon selon la revendication 1, où le moyen de fermeture est un joint flexible (43), comprenant au moins un point de rupture prédéterminé (4, 14, 24, 34, 44, 54), où le au moins un point de rupture s'ouvre lorsque la pression extérieure est appliquée.

3. Colonne à échantillon selon l'une quelconque des revendications 1 ou 2, où le matériau du moyen de fermeture est choisi du groupe consistant en caoutchouc mousse, caoutchouc silicone, silicone expansé, mousse de polyéthylène, mousse de polypropylène, caoutchouc synthétique, caoutchouc naturel.

4. Colonne à échantillon selon l'une quelconque des revendications 1 à 3 comprenant un couvercle, où le couvercle est attaché au tube.

5. Colonne à échantillon selon l'une quelconque des revendications 1 à 3, comprenant un couvercle, où le couvercle fait partie du tube de collecte.

6. Dispositif pour échantillon biologique comprenant,
(i) une colonne à échantillon selon l'une quelconque des revendications 1 à 3 ;
(ii) un tube the collecte comprenant un couvercle.
